Europäisches Patentamt

European Patent Office

Office européen des brevets

(11) Veröffentlichungsnummer: **0 033 493**
**B1**

(12) **EUROPÄISCHE PATENTSCHRIFT**

(45) Veröffentlichungstag der Patentschrift: **09.01.85**

(21) Anmeldenummer: **81100487.8**

(22) Anmeldetag: **23.01.81**

(51) Int. Cl.⁴: **G 01 J 3/46, G 03 F 3/08**

(54) Verfahren und Schaltungsanordnung zum Erkennen von Farben.

(30) Priorität: **01.02.80 DE 3003607**

(43) Veröffentlichungstag der Anmeldung:
**12.08.81 Patentblatt 81/32**

(45) Bekanntmachung des Hinweises auf die
Patenterteilung:
**09.01.85 Patentblatt 85/02**

(84) Benannte Vertragsstaaten:
**AT BE CH FR GB IT LI NL SE**

(56) Entgegenhaltungen:
**EP-A-0 004 078**
**FR-A-2 443 053**
**US-A-3 752 590**
**US-A-3 878 384**
**US-A-4 110 826**

(73) Patentinhaber: **DR.-ING. RUDOLF HELL GmbH**
**Grenzstrasse 1-5**
**D-2300 Kiel 14 (DE)**

(72) Erfinder: **Kuhn, Franz, Dr.**
**Ringenrade 8**
**D-2301 Schönkirchen (DE)**
Erfinder: **Lippek, Wilfried**
**Petersburger Weg 72**
**D-2300 Kiel (DE)**

Courier Press, Leamington Spa, England.

## Beschreibung

Technisches Gebiet

Die Erfindung bezieht sich auf die Gebiete der Technik, auf denen Farben erkannt werden müssen, insbesondere auf die Farberkennung in der elektronischen Reproduktionstechnik.

Stand der Technik

Aus der DE—B—25 44 703 sind bereits ein Verfahren und eine Schaltungsanordnung zum Erkennen von Farben bekannt, bei denen eine farbige Fläche trichromatisch abgetastet wird, wobei die gemessenen Farbkomponenten-Tripel die Raumkoordinaten von Farborten in einem Farbraum darstellen, und bei denen für jede der Farben, die erkannt werden soll, im Farbraum ein Farberkenungsraum abgegrenzt wird und die gemessenen Farbkomponenten-Tripel auf ihre Zugehörigkeit zu den Farberkenungsräumen geprüft werden und bei Zugehörigkeit zu einem Farberkenungsraum ein Farberkenungssignal abgegeben wird. Die Abgrenzung der Farberkenungsräume hinsichtlich Form, Größe und Lage im Farbraum erfolgt dort durch einstellbare Schwellensignale, wobei die Zugehörigkeit durch Vergleich der Farbkomponenten-Tripel mit den eingestellten Schwellensignalen festgestellt wird. Das bekannte Verfahren hat den Nachteil, daß sich ein Farbkenungsraum mit Hilfe der Schwellensignale ohne einen hohen Schaltungsaufwand nicht optimal an einen zu erkennenden räumlichen Farbbereich anpassen läßt, wodurch Fehler bei der Farberkennung auftreten. Solche Erkennungsfehler aufgrund falsch abgegrenzter Farberkennungsräume stellen sich oft erst nach der Farberkennung, z.B. anhand eines Farbauszuges, heraus. Zur Verbesserung der Farbtrennung müßten dann die vorhandenen Farberkennungsräume genauer abgegrenzt und/oder weitere Farberkennungsräume gebildet werden. Bei dem bekannten Verfahren erweist sich die genaue Einstellung der Schwellensignale aber als äußerst schwierig, da zwischen dem Farbraum bzw. den abgegrenzten Farberkenungsräumen einerseits und den Schwellensignalen andererseits vorstellungsmäßig kein Zusammenhang besteht. Maßnahmen, um nachträgliche partielle Grenzkorrekturen an Farberkennungsräumen vorzunehmen, werden bei dem bekannten Verfahren nicht angegeben.

In den nicht vorveröffentlichten Druckschriften DE—A—29 23 468, veröffentlicht am 22.1.81, sowie DE—A—29 23 473 und DE—A—29 23 477, veröffentlicht am 29.1.81, sind auch schon Verfahren zum Erkennen von Farben vorgeschlagen worden. Bei diesen Verfahren werden vor der Farberkennung für eine Anzahl von Farben, die innerhalb einer farbigen Fläche erkannt werden sollen, Probenpunkte in der farbigen Fläche bestimmt und deren Farborten im Farbraum Identifikationssymbole als Farberkennungssignal zugeordnet. Danach werden um die Farborte der Probenpunkte Farberkennungsräume gebildet, indem die Farborte des Farbraumes mit Identifikationssymbolen belegt werden, welche aus den zuvor den Farborten der Probenpunkte zugeordneten Identifikationssymbolen ermittelt werden, wobei jeweils alle mit demselben Identifikationssymbol belegten Farborte einen Farberkennungsraum bilden. Die Identifikationssymbole werden in einem Farberkennungs-Speicher durch die Farbkomponenten-Tripel der zugeordneten Farborte adressierbar abgeleft. Während der eigentlichen Farberkennung wird die farbige Fläche punkt- und zeilenweise abgetastet. Die dabei gewonnenen Farbkomponenten-Tripel adressieren den Farberkennungs-Speicher, und die auf den adressierten Speicherplätzen abgelegten Identifikationssymbole werden als Farberkennungssignale für die abgetasteten Farben ausgegeben.

Eine genaue Anpassung der Farberkennungsräume an die zu trennenden, räumlichen Farbbereiche wird bei den vorgeschlagenen Verfahren durch Ausmessen einer hinreichend großen Anzahl von Probenpunkten pro Farbbereich erzielt. Zur nachträglichen partiellen Grenzkorrektur von Farberkennungsräumen wird bei den vorgeschlagenen Verfahren das Ausmessen neuer Probenpunkte, eine neue Zuordnung von Identifikationssymbolen und eine nochmalige Füllung des Farberkennungs-Speichers erforderlich. Diese Vorgehensweise hat den Nachteil, daß eine längere Vorbereitungszeit für die eigentliche Farberkennung benötigt wird.

In der EP—A—0004078 werden ein Verfahren und eine Schaltungsanordnung zur selektiven Korrektur von Farbsignalen beschrieben, welche zur Herstellung von Farbauszügen von einer zu reproduzierenden Vorlage benötigt werden. Bei diesem Farbkorrekturverfahren wird eine in der Vorlage maximal zu korrigierende Farbe ausgewählt und um ihren Farbvektor ein räumlicher Korrekturbereich für einen selektiv zu korrigierenden Farbbereich um die maximal zu korrigierende Farbe durch Angabe von Grenzkoordinaten festgelegt. Während der Vorlagenabtastung wird jeder Farbvektor einer abgetasteten Farbe daraufhin untersucht, ob er mit der Spitze in den abgegrenzten Korrekturbereich fällt, indem die Farbsignale als Vektorkomponenten mit den Grenzkoordinaten des Korrekturbereiches verglichen werden. Fällt ein Farbvektor in den Korrekturbereich, wird ein selektives Korrektursignal erzeugt, dessen Größe vom Abstand des betreffenden Farbvektors von dem Farbvektor der maximal zu korrigierenden Farbe abhängt, und den Farbsignalen korrigierend hinzugefügt. Bei diesem Verfahren geht es also um die Korrektur von Farbsignalen, nicht aber um eine nachträgliche partielle Grenzkorrektur von Farberkennungsräumen bei der Farberkennung.

## Offenbarung der Erfindung

Aufgabe der vorliegenden Erfindung ist es daher, ein Verfahren und eine Schaltungsanordnung zum Erkennen von Farben anzugeben, mit denen zwecks Erhöhung der Erkennungssicherheit mit geringem Aufwand und in kürzester Zeit nachträgliche, partielle Grenzkorrekturen an Farberkennungsräumen durchgeführt werden können, um eine noch günstigere Anpassung an zu trennende Farbbereiche zu erreichen.

Diese Aufgabe wird in bezug auf das Verfahren durch die im Anspruch 1 und bezüglich der Schaltungsanordnung durch die im Anspruch 21 angegebenen Merkmale gelöst.

Weiterbildungen des erfindungsgemäßen Verfahrens sind in den Ansprüchen 2 bis 20, Weiterbildungen der erfindungsgemäßen Schaltungsanordnung sind in den Ansprüchen 22 und 23 definiert.

## Kurze Beschreibung der Zeichnungen

Die Erfindung wird im folgenden anhand der Figuren 1 bis 3 näher erläutert. Es zeigen:

Fig. 1 eine Schaltungsanordnung zur Durchführung des Verfahrens,

Fig. 2 eine graphische Darstellung zur Erläuterung des Verfahrens und

Fig. 3 eine Korrektureinrichtung.

## Bester Weg zur Ausführung der Erfindung

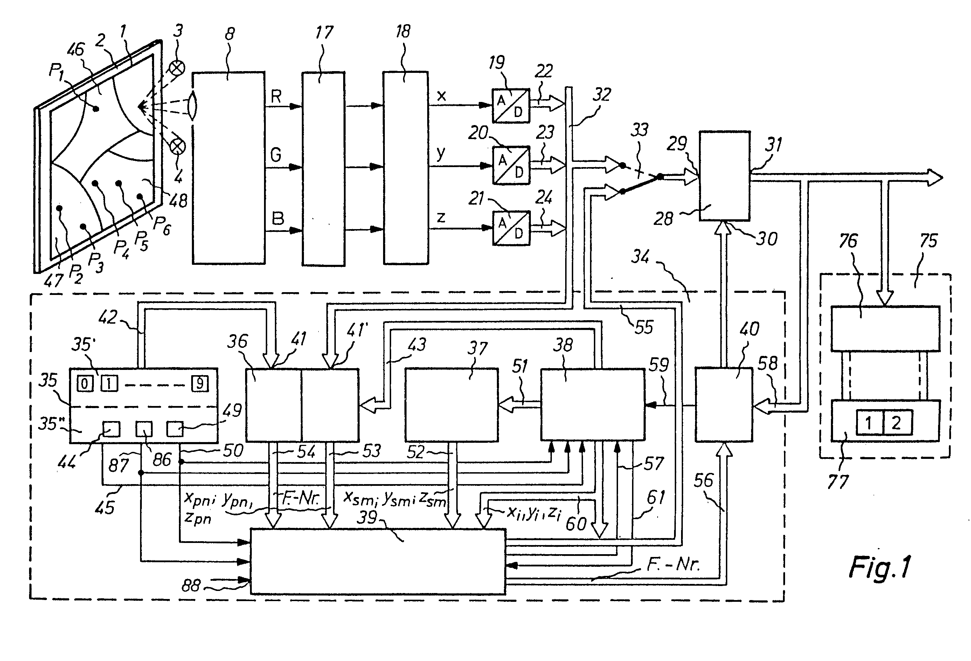

Fig. 1 zeigt ein Ausführungsbeispiel für eine Schaltungsanordnung zum Erkennen von Farben und zur partiellen Nachkorrektur von Farberkennungsräumen.

Vor der Farberkennung werden für jede Farbe, die in der Farbvorlage 1 erkannt werden soll, mindestens ein charakteristischer Probenpunkt mit Hilfe eines nur schematisch dargestellten Abtastorgans 8 in der Farbvorlage 1 ausgemessen und die Farbkomponententripel $x_{pn}$, $y_{pn}$ und $z_{pn}$ der ausgemessenen Probenpunkte über einen Adreß-Bus 32 in einem Proben-Speicher 36 abgelegt. Gleichzeitig ordnet ein Bediener mit Hilfe der Zehner-Tastatur eines Bedienungsfeldes 35' in einer Eingabe-Stufe 35 jedem Farbort eines Probenpunktes einer Farbe ein Identifikationssymbol, z.B. in Form einer Farbnummer, als Farberkennungssignal für die betreffende Farbe zu. Die zugeordneten Farbnummern werden über einen Daten-Bus 42 an den Proben-Speicher 36 gegeben und dort listenmäßig zusammen mit den zugehörigen Farbkomponententripeln $x_{pn}$, $y_{pn}$ und $z_{pn}$ der Probenpunkte abgelegt. Nach der Erstellung der Proben-Liste im Proben-Speicher 36 sind bereits allen Farborten der Probenpunkte, nachfolgend mit Proben-Farborten bezeichnet, Farb-nummern zugeordnet.

Danach werden selbsttätig Farberkennungsräume um die einzelnen Proben-Farborte gebildet, indem die innerhalb von Schalen um die Proben-Farborte liegenden Farborte Schale für Schale mit wachsendem Abstand zu den Proben-Farborten aufgerufen und mit Farbnummern belegt werden, die aus den zuvor den Proben-Farborten zugeordneten Farbnummern bestimmt werden. Die Farbnummern werden in einem Farberkennungs-Speicher 28 durch die Farbkomponententripel $x_i$, $y_i$ und $z_i$ der zugeordneten Farborte adressierbar abgelegt, wobei jeweils alle mit demselben Identifikationssymbol belegten Farborte bzw. Speicherplätze einen Farberkennungsraum bilden. In einer Rechenschaltung 39 werden aus den in einem Schalen-Speicher 37 abgelegten Schalen-Koordinaten $x_{sm}$, $y_{sm}$ und $z_{sm}$ und aus den im Proben-Speicher 36 abgelegten Farbkomponenten-Tripel $x_{pn}$, $y_{pn}$ und $z_{pn}$ der Probenpunkte die Farbkomponenten-Tripel $x_i$, $y_i$ und $z_i$ der zu den Schalen gehörigen Farborte ermittelt, welche über einen Adreß-Bus 55 die entsprechenden Adressen des Farberkennungs-Speichers 28 aufrufen. Danach ist die Bildung der Farberkennungsräume und die Füllung des Farberkennungs-Speichers 28 abgeschlossen.

Zur Kontrolle der gebildeten Farberkennungsräume im Hinblick auf die spätere Farberkennung ist dem Farberkennungs-Speicher 28 in Fig. 1 eine Farbnummern-Anzeigeinheit 75 nachgeschaltet, die z.B. aus einem BCD-Dezimal-Decoder 76 und aus einer zweistelligen Sieben-Segment-Anzeige 77 besteht. Der BCD-Dezimal-Decoder 76 wandelt die aus dem Datenausgang 31 des Farberkennungs-Speichers 28 ausgelesenen 4-bit-Farbnummern in entsprechende Steuersignale für die Sieben-Segment-Anzeige 77 um, so daß dort die Farbnummern "0" bis "15" angezeigt werden können.

Bei der Kontrolle der Speicherfüllung fährt der Bediener mit dem Abtastorgan 8 charakteristische Farbpunkte innerhalb der Farbvorlage 1 an. Die ausgemessenen Farbkomponenten-Tripel dieser Farbpunkte adressieren nach ihrer Digitalisierung in den A/D-Wandlern 19, 20 und 21 über den Adreß-Bus 32 und den Umschalter 33 den Farberkennungs-Speicher 28. Die unter den aufgerufenen Adressen abgelegten Farbnummern werden über den Datenausgang 31 ausgelesen und in der Farbnummern-Anzeigeneinheit 75 angezeigt.

Nach dieser Arbeitsmethode kann überprüft werden, ob einer bestimmten Farbe oder einem räumlichen Farbbereich der Farbvorlage 1 die richtige Farbnummer bzw. der richtige Farberkennungsraum zugeordnet wurde. Diese Überprüfung ist insbesondere für solche Farben wichtig, deren Farborte nahe den Grenzflächen der Farberkennungsräume liegen. Stellt sich nämlich bei der Überprüfung eines solchen Farbortes heraus, daß dieser besser die Farbnummer des benachbarten Farberkennungsraumes haben sollte, wird gemäß einem Merkmal der Erfindung die Farbnummer des betreffenden Farbortes unter Berücksichtigung seiner Farbraumumgebung in der gewünschten Weise partiell korrigiert, ohne daß eine Neu-

füllung des gesamten Farberkennungs-Speichers 28 notwendig wird.

Derartige Korrekturen sind in der Praxis beispielsweise dann notwendig, wenn vor der Speicherfüllung eine zu geringe Anzahl oder falsche Probenpunkte in der Farbvorlage 1 ausgemessen wurden. Andererseits bietet die partielle Grenzkorrektur die Möglichkeit, bei der Bildung der Farberkennungsräume zunächst von einer geringeren Anzahl von Probenpunkten, d.h. von einer gröberen Farbprobenentnahme, auszugehen und dann lediglich die Anpassung der Farberkennungsräume an die zu trennenden Farbbereiche in der erforderlichen Abschnitten zu optimieren. Dieses Verfahren verkürzt in vorteilhafter Weise die Vorbereitungszeit für eigentliche selbsttätige Farberkennung. Grenzkorrekturen der genannten Art können mit Vorteil auch zum Beseitigen von Konturen in Farbauszügen oder zur feineren Unterteilung von Farberkennungsräumen durchgeführt werden.

Das erfindungsgemäße Verfahren zum Erkennen von Farben, das die partielle Korrektur von Farberkennungsräumen anwendet, besteht aus drei Schritten, nämlich aus dem Ausmessen von zusätzlichen Probenpunkten, nachfolgend Zusatz-Probenpunkte genannt, in der Farbvorlage 1, aus der partiellen Löschung der Farbnummern um die zugehörigen zusätzlichen Proben-Farborte, nachfolgend Zusatzproben-Farborte genannt, im Farberkennungs-Speicher 28 und aus der Neufüllung der gelöschten Bereiche mit Farbnummern.

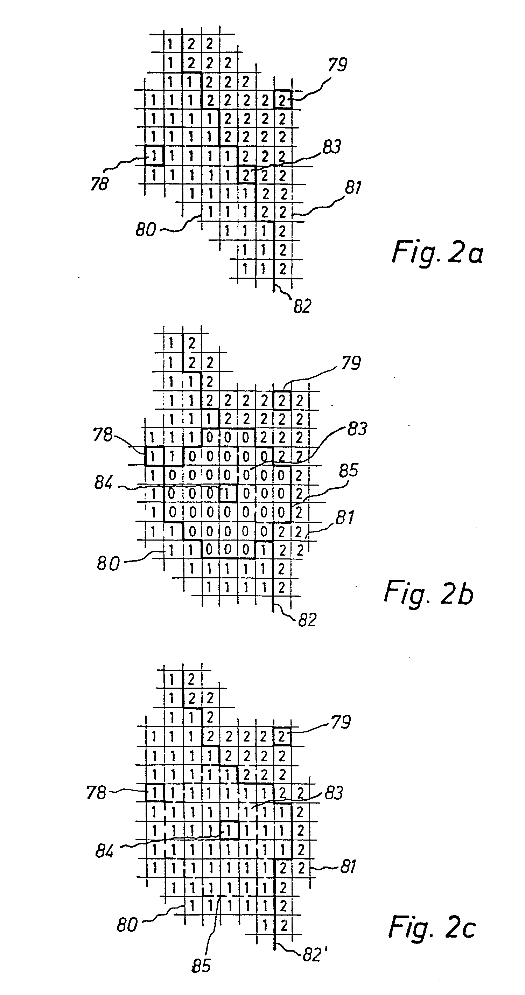

Die einzelnen Schritte sollen anhand der grafischen Darstellungen in den Figuren 2a bis 2c und der Schaltungsanordnung nach Figur 1 erläutert werden.

Die Speicherfüllung vor der partiellen Korrektur verdeutlicht die Figur 2a, in der ausschnittsweise die mit Farbnummern belegten Farborte einer Chrominanz-bene (z=konstant) des Chrominanz/Luminanz-Farbraumes bzw. die entsprechende Speicherebene des Farberkennungs-Speichers 28 dargestellt sind.

Beim Ausmessen von Probenpunkten für die Erstfüllung des Farberkennungs-Speichers 28, im folgenden Haupt-Probenpunkte genannt, wurden den zugehörigen Hauptproben-Farborten 78 und 79 die Farbnummern "1" und "2" zugeordnet. Um den Hauptproben-Farbort 78 hat sich ein erster Farberkennungsraum 80 (Farborte mit der Farbnummer "1") und um den Hauptproben-Farbort 79 ein zweiter Farberkennungsraum 81 (Farborte mit der Farbnummer "2") gebildet, die durch eine Grenzlinie 82 voneinander getrennt sind.

Beispielsweise wird nun bei der Überprüfung der Speicherfüllung für eine in der Farbvorlage 1 ausgemessene Farbe von der Farbnummern-Anzeigeeinheit 75 die Farbnummer "2" registriert. Dieser Farbe möge in der dargestellten Chrominanzebene der Figur 2a der Farbort 83 entsprechen. Es kann nun erwünscht sein, daß die ausgemessene Farbe und ihre räumliche Umgebung nicht dem Farberkennungsraum 81, sondern dem Farberkennungsraum 80 mit der Farbnummer "1" zugeordnet sein soll. In diesem Fall wird nach einem Merkmal der Erfindung die Grenzlinie 82 im Bereich des Farbortes 83 in Richtung des Hauptproben-Farbortes 79 verschoben.

1. Ausmessen von Zusatz-Probenpunkten

Der Übersichtlichkeit wegen wird der Farbvorlage 1 in dem angegebenen Beispiel lediglich ein Zusatz-Probenpunkt entnommen. Die Anzahl der Zusatz-Probenpunkte ist beliebig und richtet sich im wesentlichen nach den erforderlichen Korrekturen. Der ausgemessene Zusatz-Probenpunkt möge in Figur 2b dem Zusatzproben-Farbort 84 entsprechen, der hier wiederum mit der Farbnummer "1" belegt wird. Er behält somit dieselbe Farbnummer, die für die ihn bei der Erstfüllung des Farberkennungs-Speichers 28 ermittelt wurde. Der Unterschied besteht aber darin, daß der betreffende Farbort jetzt ein zusätzlicher Proben-Farbort ist, von dem aus unter Berücksichtigung aller Proben-Farborte, d. h. aller Hauptproben- und Zusatzproben-Farborte, die Farbraumumgebung beeinflußt wird. Zur Vereinfachung wird nachfolgend immer von Proben-Farborten die Rede sein, wenn die Gesamtheit aller Hauptproben- und Zusatzproben-Farborte gemeint ist. Die Zusatzproben-Farborte brauchen lagemäßig nicht mit den zu korrigierenden Farborten übereinstimmen, sondern nur in der räumlichen Umgebung der erforderlichen Grenzkorrektur zu liegen. Selbstverständlich können den Zusatzproben-Farborten beliebige Farbnummern zugeordnet werden.

Das Ausmessen von Zusatz-Probenpunkten wird in der Schaltungsanordnung nach Fig. 1 folgendermaßen durchgeführt:

Der Bediener mißt mit dem Abtastorgan 8 einen oder mehrere charakteristische Zusatz-Probenpunkte in der Farbvorlage 1 aus, und die zugehörigen, in den A/D-Wandlern 19, 20 und 21 digitalisierten Farbkomponenten-Tripel $x_{zp}$, $y_{zp}$ und $z_{zp}$ (15 Bit) gelangen über den Adreß-Bus 32 an den Daten-Eingang 41' des Proben-Speichers 36. Gleichzeitig erstellt der Bediener eine Zusatzproben-Liste, indem er mittels der Zehner-Tastatur des Bedienungsfeldes 35' in der Eingabe-Stufe 35 jedem Farbkomponenten-Tripel eines Zusatzproben-Farbortes eine Farbnummer "N" (4 Bit) zuordnet, welche über den Daten-Bus 42 an den Daten-Eingang 41" des Proben-Speichers 36 gegeben wird.

Jede Zeile der Zusatzproben-Liste wird unter fortlaufenden Adressen, die vom Adreß-Steuerwerk 38 über den Adreß-Bus 43 aufgerufen werden, in dem Proben-Speicher 36 als 19-Bit-Speicherwort abgelegt. Dazu betätigt der Bediener zwischen den einzelnen Probenentnahmen die Betriebstaste 44 "Probe" in dem Bedienungsfeld 35" der Eingabe-Stufe 35, wodurch ein entsprechender Befehl auf einer Leitung 45 an das Adreß-Steuerwerk 38 die Speicheradresse jeweils um "1" erhöht. Die auf diese Weise erstellte Zusatzproben-Liste kann als selbständige Liste oder als Anhang zur ursprünglichen Hauptproben-Liste unter entsprechender Markierung in dem Proben-Speicher 36 abgelegt werden.

2. Löschung der Farbnummern um die Zusatzproben-Farborte

Nach dem Ausmessen von Zusätz-Probenpunkten in der Farbvorlage 1 müssen die ursprünglich ermittelten Farbnummern um die zugehörigen Zusatzproben-Farborte gelöscht werden, ein Vorgang, der ebenfalls in Fig. 2b für den Zusatzproben-Farbort 84 dargestellt ist. Dazu wird um den Zusatzproben-Farbort 84 ein Löschbereich 85 definiert und alle innerhalb des Löschbereiches 85 liegenden Farborte mit der Farbnummer "0" belegt.

Die ursprüngliche Grenzlinie 82 zwischen den Farberkennungsräumen 80 und 81 ist in Figur 2b innerhalb des Löschungsbereiches 85 gestrichelt angedeutet. Die Ausdehnung der Löschbereiche bestimmt die korrigierende Einflußnahme des Zusatzproben-Farbortes auf die zuvor gebildeten Farberkennungsräume. Die Ausdehnung der Löschbereiche kann nach verschiedenen Kriterien festgelegt werden, auf die später näher eingegangen wird. Die Löschbereiche können kugel- oder quaderförmig sein, aber auch jede andere Raumform annehmen. Die Löschung der Farbnummern im Farberkennungs-Speicher 28 der Schaltungsanordnung nach Figur 1 läuft folgendermaßen ab:

Der Löschvorgang wird durch Betätigen einer Taste 86 "Löschen" im Bedienungsfeld 35" der Eingabe-Stufe 35 eingeleitet, wodurch über die Leitung 87 ein Löschbefehl an das Adreß-Steuerwerk 38 und die Rechenschaltung 39 gegeben wird.

Im Ausführungsbeispiel gemäß Figur 2b ist angenommen, daß die Löschbereiche Kugelform haben. Die Farbkomponenten-Tripel $x_i$, $y_i$ und $z_i$ der innerhalb der kugelförmigen Löschbereiche liegenden Farborte bzw. die Speicheradressen können schalen- oder zeilenweise aufgerufen und mit den Farbnummern "0" belegt werden.

2.1 Schalenweises Löschen der Farbnummern

In diesem Falle bilden sich Kugelschalen um die einzelnen Zusatzproben-Farborte, indem die entsprechenden Speicheradressen Schale für Schale mit wachsendem Abstand aufgerufen werden, bis die Peripherie der Löschbereiche erreicht ist. Die erforderlichen Farbkomponenten-Tripel bzw. Speicheradressen $x_i$, $y_i$ und $z_i$ der an der Kugelschalen-Bildung beteiligten Farborte ergeben sich aus den Schalen-Koordinaten $x_{sm}$, $y_{sm}$ und $z_{sm}$ und den jeweiligen Farbkompotenten-Tripeln $x_{zp}$, $y_{zp}$ und $z_{zp}$ der betreffenden Zusatzproben-Farborte als Schalenmittelpunkte nach den Gleichungen:

$$x_i = x_{zp} + x_{sm}$$
$$y_i = y_{zp} + y_{sm} \quad (1)$$
$$z_i = z_{zp} + z_{sm}$$

Die Schalen-Koordinaten sind als Schalen-Liste im Schalen-Speicher 37 und die Farbkomponenten-Tripel der Zusatzproben-Farborte als Zusatzproben-Liste im Probe-Speicher 36 abgelegt.

Zur Abfrage der Zusatzproben-Liste und der Schalen-Liste steht das Adreß-Steuerwerk 38 über die Adreß-Busse 43 und 51 mit dem Proben-Speicher 36 und mit dem Schalen-Speicher 37 in Verbindung. Die Schalen-Koordinaten $x_{sm}$, $y_{sm}$ und $z_{sm}$ werden über den Daten-Bus 52, und die Farbkomponenten-Tripel $x_{zp}$, $y_{zp}$ und $z_{zp}$ der Zusatzproben-Farborte über den Daten-Bus 53 in die Rechenschaltung 39 überschrieben und daraus die zur Schalenbildung benötigten Farbkomponenten-Tripel $x_i$, $y_i$ und $z_i$ gemäß Gleichungen (1) berechnet.

Die Schalenbildung erfolgt in der Weise, daß nacheinander die erste Schale um jeden einzelnen Zusatzproben-Farbort, dann die zweite Schale usw. gelegt wird. Es können aber auch sämtliche Schalen um einen Zusatzproben-Farbort und anschließend sämtliche Schalen um den nächsten Zusatzproben-Farbort usw. gelegt werden. Die Farbkomponenten-Tripel $x_i$, $y_i$ und $z_i$, die über den Adreß-Bus 55 und den Umschalter 33 an den Adreß-Eingang 29 gelangen, rufen die zugehörigen Adressen im Farberkennungs-Speicher 28 auf, unter denen die Farbnummer "0" über den Daten-Bus 56 und über die Tor-Schaltung 40 abgelegt werden.

Die Schalenbildung um die Zusatzproben-Farborte und die Belegung mit den Farbnummern "0" wird abgebrochen, sobald ein Löschbereich die gewünschte Ausdehnung erreicht hat. Dann wird der Befehl "Abbruch" auf der Leitung 57 an das Adreß-Steuerwerk 38 gegeben und das Aufrufen der Schalen-Liste und der Zusatzproben-Liste gestoppt.

Die Ausdehnung eines Löschbereiches kann beim Tangieren von Löschbereichen oder bei Erreichen des Löschbereich-Radius' r abgebrochen werden. Der Löschbereich-Radius r läßt sich beispielsweise durch den Bediener für alle Löschbereiche gleich oder unterschiedlich an einem Programmiereingang 88 der Rechenschaltung 39 vorgeben.

Der Löschbereich-Radius r für einen Zusatzproben-Farbort kann aber auch selbsttätig als Bruchteil des räumlichen Abstandes d zwischen dem betreffenden Zusatzproben-Farbort und dem jeweiligen räumlich am nächsten liegenden Proben-Farbort ermittelt werden, welcher mit einer zum betreffenden Zusatzproben-Farbort unterschiedlichen Farbnummer belegt ist. Dazu wird das Farbkomponenten-Tripel $x_{zp}$, $y_{zp}$ und $z_{zp}$ des betreffenden Zusatzproben-Farbortes von der Zusatzproben-Liste und nacheinander alle Farbkomponenten-Tripel $x_p$, $y_p$ und $z_p$ aller Proben-Farborte der Hauptproben- und Zusatzproben-Liste aus dem Proben-Speicher 36 abgerufen und die Abstände d in der Rechenschaltung 39 nach der vektoriellen Abstandsgleichung:

$$d=\sqrt{(x_p-x_{zp})^2+(y_p-y_{zp})^2+(z_p-z_{zp})^2} \qquad (2)$$

ermittelt. Aus dem kleinsten Abstand $d_{min}$ ergibt sich dann der erforderliche Löschbereich-Radius r.

In vorteilhafter Weise läßt sich der Löschbereich-Radius r auch anhand der zu analysierenden Farbvorlage 1 festlegen. Dazu bestimmt der Bediener mit dem Abtastorgan 8 das Farbkomponenten-Tripel $x_r$, $y_r$ und $z_r$ derjenigen Farbe in der Farbvorlage 1, die durch einen bestimmten Zusatzproben-Farbort nicht verändert werden soll, die also an der Peripherie des Löschbereiches um diesen Zusatzproben-Farbort liegt. Aus dem Farbkomponenten-Tripel $x_r$, $y_r$ und $z_r$ und dem Farbkomponenten-Tripel $x_{zp}$, $y_{zp}$, $z_{zp}$ des Zusatzproben-Farbortes wird dann nach der angegebenen vektoriellen Abstandsgleichung (2) der erforderliche Löschbereich-Radius r berechnet.

### 2.2 Zeilenweise Löschung der Farbnummern

In diesem Falle werden zur Bildung eines kugelförmigen Löschbereiches um einen Zusatzproben-Farbort nacheinander die Farbkomponenten-Tripel bzw. Speicheradressen sämtlicher Farborte zeilenweise aufgerufen, jeweils der räumliche Abstand d zwischen dem momentan aufgerufenen Farbort und dem Zusatzproben-Farbort ermittelt und mit dem vorgegebenen oder berechneten Löschbereich-Radius r verglichen. Alle aufgerufenen Farborte (Adressen), deren Abstand d kleiner als der Löschbereich-Radius r ist, liegen innerhalb des Löschbereiches und werden, wie bereits erläutert, mit der Farbnummer "0" belegt. Anschließend wiederholt sich der Vorgang für den nächsten Zusatzproben-Farbort.

Dieser Vorgang läuft in der Schaltungsanordnung wie folgt ab.

Das Farbkomponenten-Tripel $x_{zp}$, $y_{zp}$ und $z_{zp}$ eines der Zusatz-Probenpunkte wird von der im Proben-Speicher 36 angelegten Zusatzproben-Liste in die Rechenschaltung 39 transferiert. Das Adreß-Steuerwerk 38 ruft alle möglichen Farbkomponenten-Tripel $x_i$, $y_i$ und $z_i$ auf, welche den Farberkennungs-Speicher 28 über den Adreß-Bus 55 zeilenweise adressieren. Gleichzeitig gelangen die aufgerufenen Farbkomponenten-Tripel über den Daten-Bus 60 in die Rechenschaltung 39, in der die beschriebene Abstandsrechnung durchgeführt wird.

Für den Fall, daß quaderförmige Löschbereiche gebildet werden sollen, werden die Bereichsgrenzen durch die Werte $\Delta x$, $\Delta y$ und $\Delta z$ um die Zusatzproben-Farborte definiert. Das Adreß-Steuerwerk 38 ruft die Adressen des Farberkennungs-Speichers 28 wiederum zeilenweise auf. Wenn die aufgerufenen Adressen in den betreffenden Löschbereich fallen, werden diese mit den Farbnummern "0" belegt.

### 3. Neufüllung der Löschbereiche mit Farbnummern

Nachdem sich die Löschbereiche um die Zusatzproben-Farborte gebildet haben, werden für die innerhalb der Löschbereiche liegenden Farborte selbsttätig neue Farbnummern ermittelt, indem jedem zu belegenden Farbort die Farbnummer des räumlich am nächsten liegenden Proben-Farbortes zugeordnet wird.

Figur 2c zeigt die Chrominanz-Ebene nach der Neufüllung des Löschbereiches 85 um den Zusatzproben-Farbort 84. Der Farberkennungsraum 80 mit der Farbnummer "1" hat sich in den Farberkennungsraum 81 mit der Farbnummer "2" ausgedehnt, wodurch sich die neue Grenzlinie 82' gebildet hat. Die alte Grenzlinie 82 und der ehemalige Löschbereich 85 sind wiederum gestrichelt angedeutet. Der korrigierte Farbort 83 einschließlich seiner Farbraumumgebung ist jetzt wie gewünscht dem Farberkennungsraum 80 mit der Farbnummer "1" eindeutig zugeordnet.

Die Neufüllung läuft in der Schaltungsanordnung der Figur 1 wie folgt ab.

Zunächst werden alle Zusatzproben-Farborte bzw. ihre Speicheradressen mit den vom Bediener zuvor zugeordneten Farbnummern belegt. Dazu werden mit Hilfe des Adreß-Steuerwerks 38 sämtliche Farbnummern und Farbkomponenten-Tripel $x_{zp}$, $y_{zp}$ und $z_{zp}$ der Zusätzproben-Liste aus dem Proben-Speicher 36 über die Daten-Busse 53 und 54 in die Rechenschaltung 39 transferiert. Die Farbkomponenten-Tripel $x_{zp}$, $y_{zp}$ und $z_{zp}$ der Zusatz-Probenpunkte adressieren über den Adreß-Bus 55 den Farberkennungs-Speicher 28, und die entsprechenden Farbnummern der Zusatzproben-Farborte werden über den Daten-Bus 56, die Tor-Schaltung 40 und über den Daten-Eingang 30 an den Farberkennungs-Speicher 28 übermittelt. Anschließend erfolgt die schalen- oder zeilenweise Neufüllung der Löschbereiche.

### 3.1 Schalenweise Neufüllung der Löschbereiche

3.1.1 In einer ersten Verfahrensform werden nacheinander alle Farborte bzw. Speicheradressen, welche die Proben-Farborte, also die Hauptproben- und Zusatzproben-Farborte, schalenförmig, umgeben, Schale für Schale mit wachsendem Abstand von den betreffenden Proben-Farboten aufgerufen und auf die Farbnummer "0" (Löschbereich) überprüft. Im Falle, daß bei einem aufgerufenen Farbort die Farbnummer "0" angetroffen wird, erhält dieser Farbort die Farbnummer des zugehörigen, zentralen Proben-Farbortes. Dieser Vorgang läuft in der Reihenfolge ab, daß nacheinander um jeden Proben-Farbort die erste Kugelschale, anschließend die zweite Kugelschale usw. gelegt wird, indem die Rechenschaltung 39 die erforderlichen Farbkomponenten-Tripel $x_i$, $y_i$ und $z_i$ aufruft. Zunächst wird die Schalen-Liste für die erste Kugelschale über den Daten-Bus 52 in die Rechenschaltung 39 eingegeben und die Zusatzproben-Liste einschließlich der Hauptproben-Liste Zeile für Zeile abgearbeitet, wobei nacheinander die Farbkomponenten-Tripel $x_i$, $y_i$ und $z_i$ der ersten Kugelschale um jeden Proben-Farbort berechnet werden. Diese Farbkomponenten-Tripel adressieren wiederum den Farberkennungs-Speicher 28. Gleichzeitig wird jeder adressierte Speicherplatz auf seine eventuell schon erfolgte Belegung mit einer Farbnummer überprüft. Dazu ist die Tor-Schaltung 40 über die Daten-Leitung 58 mit dem Daten-Ausgang 31 des Farberkennungs-Speichers 28 verbunden. Leigt eine Belegung vor, wird die Tor-Schaltung 40 gesperrt, so daß keine Farbnummer über den Daten-Bus 56 in den Farberkennungs-Speicher 28 eingeschrieben werden kann. Liegt dagegen keine Belegung (Farbnummer "0") vor, ist die Tor-Schaltung 40 geöffnet, und unter de momentan aufgerufenen Adresse wird die Farbnummer desjenigen Proben-Farbortes abgespeichert, um den gerade eine Kugelschale gebildet wird. Auf diese Weise werden immer mehr Kugelschalen um die einzelnen Proben-Farborte gelegt, bis die Löschbereiche wieder mit Farbnummern belegt sind.

3.1.2 Eine zweite Verfahrensform bei der Neufüllung der Löschbereiche mit Farb-nummern besteht darin, daß zunächst die Farborte eines der Löschbereiche Schale für Schale um die betreffenden Zusatzproben-Farborte aufgerufen und für jeden aufgerufenen Farbort gemäß der Abstandsgleichung (2) eine Abstandsrechnung zu allen Proben-Farborten durchgeführt wird.

Der zu belegende Farbort erhält dann die Farbnummer desjenigen Proben-Farbortes, für den der geringste Abstand festgestellt wurde.

Dieser vorgang läuft folgendermaßen ab. In der Rechenschaltung 39 wird das Farbkom-ponenten-Tripel $x_i$, $y_i$ und $z_i$ eines der aufzuruf-enden Farborte innerhalb der Schalen berechnet, und über den Adreß-Bus 55 die entsprechende Adresse im Farberkennungs-Speicher 28 aufgerufen. Außerdem ruft das Adreß-Steuerwerk 38 über den Adreß-Bus 43 zeilenweise die Proben-Listen aus dem Proben-Speicher 36 ab. Die Farbkomponenten-Tripel der Probenpunkte und die von dem Bediener zugeordneten Farbnummern werden über die Daten-Busse 53 und 54 in die Rechenschaltung 39 transferiert. Zwischen dem zeilenweisen Transfer der Proben-Listen wird jeweils der Abstand zwischen dem aufgerufenen Farbort und dem entsprechenden Proben-Farbort bestimmt und mit dem zuvor ermittelten Abstand verglichen. Dieser Vorgang ist mit der Berechnung des Abstandes $d_n$ zu dem n-ten Proben-Farbort abgeschlossen, und gleichzeitig ist auch der geringste Abstand $d_{min}$ festgestellt.

Die Farbnummer, die dem Proben-Farbort mit dem geringsten Abstand zugeordnet ist, wird aus der Rechenschaltung 39 über den Daten-Bus 56, die Tor-Schaltung 40 und über den Daten-Eingang 30 in den Farberkennungs-Speicher 38 überschrieben und dort unter der markierten Adresse abgelegt. Diese Vorgänge wiederholen sich für alle Farborte des Löschbereiches. Anschließend wird zum nächsten Zusatzproben-Farbort übergegangen usw., bis schließlich alle Löschbereiche mit Farb-nummern belegt sind.

3.2 Zeilenweise Neufüllung der Löschbereiche
Alternativ zum schalenweisen Aufrufen der Farborte bzw. Adressen des Farberkennungs-Speichers 28 innerhalb der Löschbereiche können sämtliche Speicheradressen auch einmalig vom Adreß-Steuerwerk 38 über den Adreß-Bus 55 aufgerufen und mit Hilfe der Tor-Schaltung 40 auf die Farbnummern "0" überprüft werden. Wird eine Adresse mit der Farbnummer "0" angetroffen, so handelt es sich um die Adresse eines Löschbereiches, und die Tor-Schaltung 40 übermittelt einen Befehl "Löschbereich" über die Leitung 59 an das Adreß-Steuerwerk 38, wodurch die betreffende Adresse markiert und das weitere Aufrufen von Adressen unterbrochen wird. Jetzt wird in der Rechenschaltung 39 mit Hilfe der Abstandsrechnung der dem markierten Farbort am nächsten liegende Proben-Farbort ermittelt und dessen Farbnummer über den Daten-Bus 56 und die Tor-Schaltung 40 unter der markierten Adresse abgelegt. Dann wird die nächste Adresse mit der Farbnummer "0" festgestellt und auch für diese Adresse die beschriebene Abstandsrechnung durchgeführt, bis schließlich alle Löschbereiche mit Farbnummern belegt sind.

Für eine grobe nachträgliche Korrektur der Farberkennungsräume ließe sich das Abtastorgan 8 auch in dicht nebeneinanderliegenden Strichbewegungen über den zu korrigierenden Teil der Farbvorlage 1 führen, um möglichst viele Farbkomponenten-Tripel dieses Teils zu erfassen. In dieser Betriebsweise befindet sich der Umschalter 33 in der gestrichelt darge-stellten Schaltstellung, und die Farbkom-ponenten-Tripel wählen direkt die entsprechenden Adressen des Farberkennungs-Speichers 28 an. Gleichzeitig mit der Bewegung des Abtastorgans 8 gibt der Bediener mit Hilfe der Zehner-Tastatur der Eingabe-Stufe 35 die neue Farbnummer ein, welche dann unter allen aufgerufenen Adressen im Farberkennungs-Speicher 28 abgelegt wird.

In einer bevorzugten Weiterbildung werden die einzelnen, mit Farbnummern belegten Chrominanz-Ebenen das Chrominanz/Luminanz-Farbraumes in Abhängigkeit der Helligkeitswerte (Farbkomponente z) bzw. die einzelnen Speicherebenen des Farberkennungs-Speichers 28 auf dem Farbmonitor einer Korrektureinrichtung dargestellt. Jeder Farbort bzw. jede Speicheradresse entspricht einem Bildpunkt. Den Farbnummern können frei wählbare Farben zugeordnet werden, so daß jeder Farberkennungsraum (Farborte derselben Farbnummer) durch eine bestimmte Farbe gekennzeichnet ist. Auf diese Weise lassen sich auf dem Farbmonitor jeweils Schnittebenen durch die einzelnen Farberkennungsräume als senkrecht zur Z-Achse verlaufende, unterschiedlich gefärbte Flächen darstellen. Eine partielle Korrektur der Farberkennungsräume kann jetzt in jeder Schnittebene mit Hilfe eines Koordinatenerfassungsgerätes, z.B. mittels eines Cursors, und eines entsprechenden Austausches von Farbnummern im Farberkennungs-Speicher erfolgen.

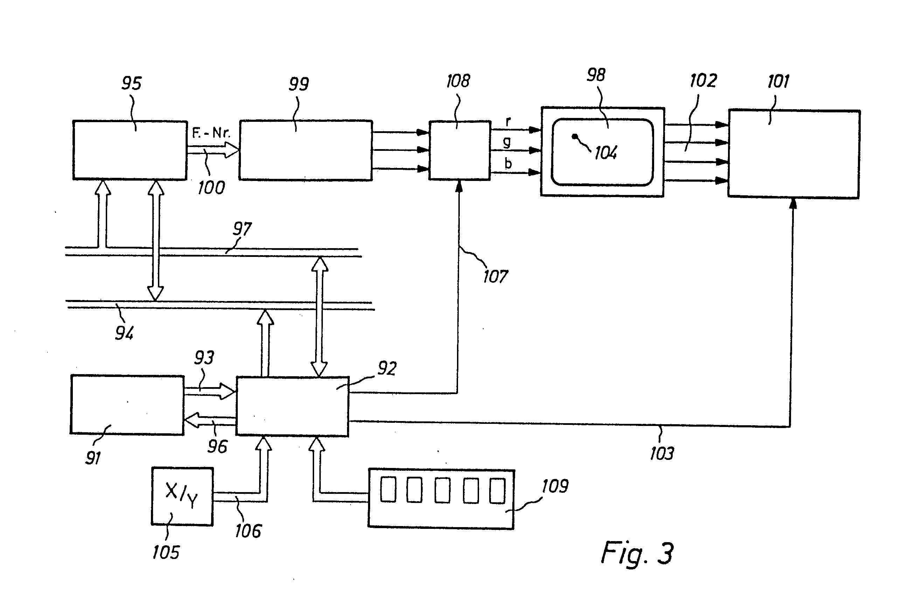

Figur 3 zeigt ein Ausführungsbeispiel für eine derartige Korrekturschaltung.

Die zur Darstellung benötigten Farbnummern werden aus dem Datenbestand eines Speichermediums 91 ausgewählt und von dort mit Unterstützung eines Rechners 92 über Daten-Busse 93 und 94 in einen Bildwiederhol-Speicher 95 geladen. Die synchrone Adressierung des Speichermediums 91 und die des Bildwiederhol-Speichers 95 werden von dem Rechner 92 über die Adreß-Busse 96 und 97 gesteuert.

Das Speichermedium 91 kann der Farberkennungs-Speicher 28 oder eine Magnetplatte (Floppy Disk) usw. sein, auf die der Inhalt des Farberkennungs-Speicher zuvor über-schrieben wurde.

Zur Darstellung der Chrominanz-Ebenen als Schnittbild auf dem Bildschirm eines Farbmonitors 98 ruft der Rechner 92 über den Adreß-Bus 97 die Adressen des Bildwiederhol-Speichers 95 zyklisch auf, und die dort abgelegten digitalen Farbnummern werden zeilenweise und innerhalb jeder Zeile Bildpunkt für Bildpunkt ausgelesen.

In einem Farbgeber 99 kann jeder Farbnummer eine frei wählbare Farbe bzw. deren Farbsignale r, g und b als Ansteuersignale für den Farbmonitor 98 zugeordnet werden. Die aus dem Bildwiederholspeicher 95 ausgelesenen Farbnummern gelangen über den Daten-Bus 100 an den Farbgeber 99, welcher die zuvor zugeordneten Farbsignale r, g und b an den Farbmonitor 99 durchschaltet.

Die Aufzeichnung erfolgt nach dem Zeilensprungverfahren, um ein flimmerfreies Bild zu bekommen. Ein Taktgenerator 101 erzeugt nach der beim Fernsehen üblichen Technik die zur Bildaufzeichnung benötigten horizontalen und vertikalen Ablenksignale und die Zeilenstart- und Bildstart-Impulse auf einer Mehrfachleitung 102.

Der Rechner 92 liefert Synchronimpulse über eine Leitung 103 an den Taktgenerator 101, damit der Auslesevorgang und die Bildaufzeichnung synchron ablaufen.

Zur Markierung eines Bildpunktes bzw. einer Adresse im Bildwiederhol-Speicher 95 wird eine Lichtmarke 104 in den Bildschirm des Farbmonitors 98 eingeblendet, die sich durch Vorgabe von X/Y-Koordinaten an einem Koordinatenerfassungsgerät 105 über die Bildschirmfläche verschieben läßt.

Die vorgegebenen Koordinaten X/Y werden über einen Daten-Bus 106 in den Rechner 92 eingegeben und dort mit den zyklisch aufgerufenen Adressen des Bildwiederhol-Speichers 95 verglichen. Bei Gleichheit gibt der Rechner 92 über eine Leitung 107 einen Befehl "Lichtmarke" an einen Signalgeber 108 im Signalweg der Farbsignale r, g und b. Der Befehl erscheint genau in dem Zeitpunkt, in dem die Elektronenstrahlen die durch die vorgegebenen Koordinaten markierte Bildschirmstelle überstreichen. In diesem Zeitpunkt entsteht die Lichtmarke durch kurzzeitiges Einschalten aller Farbsignale mit derselben Leuchtdichte.

Gleichzeitig markiert die Lichtmarke 104 auch denjenigen Speicherplatz im Bildwiederhol-Speicher 95, zu dem unmittelbar Zugriff besteht.

Die partielle Korrektur der dargestellten Schnittflächen erfolgt nun auf die Weise, daß der Bediener die zu korrigierenden Bereiche mit dem Koordinatenerfassungsgerät 105 markiert und mittels einer Tastatur in einer Bedienungseinheit 109 die gewünschte Farbnummer über einen Daten-Bus 110 in den Rechner 92 eingibt.

Während der vertikalen Austastlücke der Bildaufzeichnung adressiert der Rechner 92 über den Adreß-Bus 97 die vom Koordinatenerfassungsgerät 105 bzw. der Lichtmarke 104 markierten Adressen des Bildwiederhol-Speichers 95, und die geänderten Farbnummern werden über den Daten-Bus 94 unter den aufgerufenen Adressen abgelegt. Während der nächsten Bildwiederholperiode erscheint auf dem Bildschirm des Farbmonitors bereits des korrigierte Farbbild.

Gewerbliche Verwertbarkeit

Die Erfindung wird in vorteilhafter Weise überall dort angewendet, wo Farben erkannt werden müssen. Dies gilt insbesondere für die elektronische Reproduktionstechnik, bei der mittels Farberkennungs-Schaltungen Farbauszüge für den Textil-, Dekor- und Verpackungsdruck erstellt oder Farbkorrekturen für den Mehrfarbendruck durchgeführt werden.

**Patentansprüche**

1. Verfahren zum Erkennen von Farben, bei dem eine farbige Fläche trichromatisch abgetastet wird, wobei die gemessenen Farbkomponenten-Tripel die Raumkoordinaten von Farborten in einem Farbraum darstellen, und bei dem für jede der Farben, die erkannt werden soll, im Farbraum eine Farberkennungsraum abgegrenzt wird und die gemessenen Farbkomponenten-Tripel auf ihre Zugehörigkeit zu den Farberkennungsräumen geprüft werden und bei Zugehörigkeit zu einem Farberkennungsraum ein Farberkennungssignal abgegeben wird, dadurch gekennzeichnet, daß

a) für eine Anzahl von Farben, die erkannt werden sollen, Probenpunkte bestimmt werden und deren Farborten im Farbraum Identifikationssymbole als Farberkennungssignale zugeordnet werden,

b) die Farberkennungsräume dadurch gebildet werden, daß nach der Bestimmung der Probenpunkte den Farborten des Farbraums Identifikationssymbole zugeordnet werden, die aus den zuvor den Farborten der Probenpunkte zugeordneten Identifikationssymbolen ermittelt werden, wobei jeweils alle mit demselben Identifikationssymbol belegten Farborte einen Farberkennungsraum bilden,

c) zur partiellen Grenzkorrektur eines Farberkennungsraums nach Bildung der innerhalb des Farbraums liegenden Farberkennungsräume in der räumlichen Umgebund der gewünschten partiellen Grenzkorrektur mindestens ein Farbort als zusätzlicher Proben-Farbort bestimmt und diesem Farbort eines der bereits vorhandenen, den anderen Proben-Farboten zugeordneten Identifikationssymbole oder ein anderes Identifikationssymbol zugeordnet wird,

d) die bei der Bildung der Farberkennungsräume erfolgte Zuordnung von Identifikationssymbolen zu Farborten für die innerhalb eines räumlichen Löschbereiches um den zusätzlichen Proben-Farbort liegenden Farborte rückgängig gemacht wird, und

e) jedem der innerhalb des Löschbereichs liegenden Farborte ein aus den Identifikationssymbolen der ursprünglichen Proben-Farborte und des zusätzlichen Proben-Farbortes ermitteltes neues Identifikationssymbol zugeordnet wird.

2. Verfahren nach Anspruch 1, dadurch gekennzeichnet, daß der Löschbereich aus Schalen um den zusätzlichen Proben-Farbort gebildet wird, indem die innerhalb der Schalen liegenden Farborte Schale für Schale mit wachsendem Abstand von dem zusätzlichen Proben-Farbort bis an die Grenze des Löschbereichs aufgerufen und die den aufgerufenen Farborten zuvor zugeordneten Identifikationssymbole gelöscht werden.

3. Verfahren nach Anspruch 2, dadurch gekennzeichnet, daß die Schalen als Kugelschalen gebildet werden.

4. Verfahren nach Anspruch 3, dadurch gekennzeichnet, daß die Bildung des Löschbereiches beim Tangieren eines benachbarten Löschbereichs abgebrochen wird.

5. Verfahren nach einem der Ansprüche 1 bis 4, dadurch gekennzeichnet, daß zur Löschung der Identifikationssymbole innerhalb des Löschbereiches

a) Farborte des Farbraumes aufgerufen und auf ihre Zugehörigkeit zu dem Löschbereich überprüft werden und

b) die den aufgerufenen Farborten zuvor zugeordneten Identifikationssymbole gelöscht werden, falls die aufgerufenen Farborte innerhalb des Löschbereiches liegen.

6. Verfahren nach Anspruch 3, dadurch gekennzeichnet, daß der Radius eines kugelförmigen Löschbereiches aus dem räumlichen Abstand zwischen dem zusätzlichen Proben-Farbort und demjenigen Farbort bestimmt wird, der dem zusätzlichen Proben-Farbort am nächsten liegt und dem ein anderes Identifikationssymbol zugeordnet ist als dem zusätzlichen Proben-Farbort.

7. Verfahren nach Anspruch 3, dadurch gekennzeichnet, daß der Radius eines kugelförmigen Löschbereiches aus dem räumlichen Abstand zwischen dem zusätzlichen Proben-Farbort und demjenigen Farbort ermittelt wird, dessen Zugehörigkeit zu einem Farberkennungsraum bei der nachträglichen partiellen Grenzkorrektur nicht geändert werden soll.

8. Verfahren nach Anspruch 5, dadurch gekennzeichnet, daß

a) jeweils der räumliche Abstand zwischen dem zusätzlichen Proben-Farbort und einem aufgerufenen Farbort festgestellt wird und

b) die Zugehörigkeit des aufgerufenen Farbortes zu dem Löschbereich durch Vergleich des ermittelten Abstandes mit dem Radius des Löschbereiches festgestellt wird.

9. Verfahren nach einem der Ansprüche 1 bis 8, dadurch gekennzeichnet, daß bei der Neubelegung jeder Farbort des Löschbereiches mit dem Identifikationssymbol des räumlich am nächsten liegenden ursprünglichen Proben-Farbortes oder zusätzlichen Proben-Farbortes belegt wird.

10. Verfahren nach einem der Ansprüche 1 bis 8, dadurch gekennzeichnet, daß bei der Neubelegung

a) um die ursprünglichen und zusätzlichen Proben-Farborte als Schalenmittelpunkte Schalen mit jeweils gleichen Abständen zu den Schalenmittelpunkten gelegt und die jeweils innerhalb der Schalen liegenden Farborte aufgerufen werden,

b) die aufgerufenen Farborte auf erfolgte Löschung der zugeordneten Identifikationssymbole überprüft werden und

c) den aufgerufenen Farborten jeweils die Identifikationssymbole der die Schalenmittelpunkte bildenden Farborte zugeordnet werden.

11. Verfahren nach einem der Ansprüche 1 bis 8, dadurch gekennzeichnet, daß bei der Neubelegung

a) die Farborte, welche den zusätzlichen Proben-Farbort schalenförmig umgeben, Schale für Schale mit wachsendem Abstand zu dem zusätzlichen Proben-Farbort aufgerufen werden,

b) jeweils die räumlichen Abstände der aufgerufenen Farborte zu allen Proben-Farborten ermittelt und miteinander verglichen werden und

c) den aufgerufenen Farborten jeweils das Identifikationssymbol des räumlich am

9

nächsten liegenden Proben-Farbortes zugeordnet wird.

12. Verfahren nach einem der Ansprüche 1 bis 8, dadurch gekennzeichnet, daß bei der Neubelegung

a) die Farborte aufgerufen und auf Löschung der zugeordneten Identifikationssymbole hin überprüft werden,

b) im Falle einer erfolgten Löschung die räumlichen Abstände eines aufgerufenen Farbortes zu allen Proben-Farborten ermittelt und miteinander verglichen werden und

c) den Farborten, deren Identifikationssymbole gelöscht sind, jeweils das Identifikationssymbol des räumlich am nächsten liegenden Proben-Farbortes zugeordnet wird.

13. Verfahren nach einem der Ansprüche 1 bis 12, dadurch gekennzeichnet, daß

a) den Farborten des Farbraumes Speicherplätze eines Speichers zugeordnet werden, welche durch die zugehörigen digitalisierten Farbkomponenten-Tripel adressierbar sind, und

b) die den Farborten zugeordneten Identifikationssymbole auf den entsprechenden Speicherplätzen abgelegt werden.

14. Verfahren nach Anspruch 1, dadurch gekennzeichnet, daß die Farbkomponenten-Tripel den Farbmeßwert-Signalen (R, G, B) entsprechen.

15. Verfahren nach Anspruch 1, dadurch gekennzeichnet, daß die Farbkomponenten-Tripel den Chrominanz-Signalen (x, y) und dem Helligkeits-Signal (z) entsprechen.

16. Verfahren nach Anspruch 1, dadurch gekennzeichnet, daß die Farbkomponenten-Tripel den Zylinder-Farbkoordinaten (S, T, L) entsprechen.

17. Verfahren nach einem der Ansprüche 1 bis 16, dadurch gekennzeichnet, daß die den einzelnen Farborten zugeordneten Identifikationssymbole angezeigt werden.

18. Verfahren nach einem der Ansprüche 1 bis 17, dadurch gekennzeichnet, daß Chrominanz-Ebenen darstellende Schnittebenen durch die innerhalb des Farbraums abgegrenzten Farberkennungsräume auf einem Monitor dargestellt werden.

19. Verfahren nach Anspruch 18, dadurch gekennzeichnet, daß

a) den unterschiedlichen Identifikationssymbolen jeweils die Farbsignal-Tripel einer frei wählbaren Farbe zugeordnet werden,

b) die zu der darzustellenden Schnittebene gehörenden Farborte ausgewählt und deren zugehörige Identifikationssymbole zyklisch aufgerufen werden und

c) anstelle der aufgerufenen Identifikationssymbole jeweils die frei zugeordneten Farbsignal-Tripel an den Monitor gegeben werden, wodurch die einzelnen Farberkennungsräume in den verschiedenen, ausgewählten Farben dargestellt werden.

20. Verfahren nach Anspruch 18 oder 19, dadurch gekennzeichnet, daß eine Grenzkorrektur an den Farberkennungsräumen in den dargestellten Schnittebenen durch Substitution von Identifikationssymbolen mit Hilfe eines Cursors durchgeführt wird.

21. Schaltungsanordnung zur Durchführung des Verfahrens nach Anspruch 2, bestehend aus

a) einer Lichtquelle (3, 4) bekannter Spektralzusammensetzung zur Beleuchtung der zu untersuchenden farbigen Fläche, und

b) drei optoelektronischen Wandlern (8) zur Messung von Farbkomponenten-Tripeln, gekennzeichnet, durch

c) an die optoelektronischen Wandler (8) angeschlossene A/D-Wandler (19, 20, 21) zur Digitalisierung der Farbkomponenten-Tripel,

d) einen mit den A/D-Wandlern (19, 20, 21) verbundenen Farberkennungs-Speicher (28), in dem jeder Speicherplatz einem Farbort des Farbraumes entspricht und jeder Speicherplatz durch das Farbkomponenten-Tripel des entsprechenden Farbortes adressierbar ist und in dem auf den Speicherplätzen den einzelnen Farborten zuzuordnende Identifikationssymbole als Farberkennungssignale ablegbar sind,

e) eine Eingabe-Stufe (35) zur Vorgabe von Proben-Farborten zuzuordnenden Identifikationssymbolen,

f) einen mit der Eingabe-Stufe (35) und den A/D-Wandlern (19, 20, 21) verbundenen Proben-Speicher (36) zur zugeordneten Ablage der digitalisierten Farbkomponenten-Tripel und der vorgegebenen Identifikationssymbole der Proben-Farborte,

g) einen Schalen-Speicher (37) zur Ablage der Koordinaten von die Farborte umgebenden Schalen,

h) eine an den Proben-Speicher (36), den Schalen-Speicher (37) und den Farberkenn-ungs-Speicher (28) angeschlossene Rechen-schaltung (39) zur Ermittlung der Identifikationssymbole für die Farborte des Farbraumes aus den Identifikationssymbolen der Proben-Farborte und zur Berechnung der ent-sprechenden Speicherplätze des Farberkenn-ungs-Speichers (28) bei der Bildung der Farberkennungsräume, zum Berechnen der zu einem Löschbereich gehörenden Speicherplätze des Farberkennungs-Speichers (28) und dem Löschen der entsprechenden Identifikationssymbole bei der Bildung des Löschbereiches und zum Ermitteln von neuen Identifikationssymbolen für den Löschbereich aus den Identifikationssymbolen der Proben-Farborte und zum Aufrufen der zu dem Löschbereich gehörigen Speicherplätze des Farberkennungs-Speichers (28) bei der partiellen Korrektur eines Farberkennungsraumes,

i) ein mit dem Proben-Speicher (36), dem Schalen-Speicher (37) und der Rechenschaltung (39) verbundenes Adreß-Steuerwerk (38), und durch

j) eine an den Farberkennungs-Speicher (28) und die Rechenschaltung (39) angeschlossene Schaltungsstufe (40) zur Überprüfung der aufgerufenen Speicherplätze des Farberkennungs-Speichers (28) auf Belegung mit Identifikationssymbolen.

22. Schaltungsanordnung nach Anspruch 21, dadurch gekennzeichnet, daß dem Farberkennungs-Speicher (28) eine Anzeigeeinheit (75) für die Identifikationssymbole nachgeschaltet ist.

23. Schaltungsanordnung nach Anspruch 21 oder 22, gekennzeichnet durch

a) einen Bildwiederhol-Speicher (95), der an den Farberkennungs-Speicher (28) angeschlossen ist, zur Übernahme der zu darzustellenden Schnittebenen gehörenden Identifikationssymbole aus dem Farberkennungs-Speicher (28),

b) einen Farbmonitor (98) zur Darstellung der Schnittebenen durch die Farberkennungsräume,

c) einen Farbgeber (99), welcher mit dem Bildwiederhol-Speicher (95) und dem Farbmonitor (98) in Verbindung steht und jedem aus dem Bildwiederhol-Speicher (95) ausgelesenen Identifikationssymbol das Farbsignal-Tripel einer frei wählbaren Farbe als Ansteuersignale für den Farbmonitor (98) zuordnet, wodurch die Farberkennungsräume farblich unterschiedlich dargestellt werden, und

d) eine Steuerschaltung (92, 109) mit einem Koordinaten-Erfassungsgerät (105), die an den Bildwiederhol-Speicher (95) angeschlossen ist, zur Markierung von Speicheradressen bzw. Farborten im Bildwiederhol-Speicher (95) und zur Substitution der Identifikationssymbole unter den aufgerufenen Adressen.

**Revendications**

1. Procédé pour la détection de couleurs dans lequel une surface colorée est balayée en trichromie, les triplets des composantes de couleurs représentant les coordonnées spatiales d'emplacements de couleurs dans un espace de couleurs, procédé dans lequel pour chacune des couleurs qui doivent être détectées, un espace de détection de couleurs est délimité dans l'espace de couleurs et les triplets de composantes de couleurs mesurés sont vérifiés en ce qui concerne leur appartenance aux espaces d'identification de couleurs, et en cas d'appartenance à un espace d'identification de couleurs, un signal d'identification de couleurs est délivré, procédé caractérisé en ce que:

a) pour un certain nombre de couleurs qui doivent être détectées, des points échantillons sont déterminés et des symboles d'identification sous la forme de signaux de détection de couleurs sont associés à leurs emplacements de couleurs dans l'espace de couleurs,

b) les espaces d'identification de couleurs sont constitués en ce que, après la détermination des points échantillons des symboles d'identification sont associés aux emplacements de couleurs d'espace de couleurs, ces symboles étant déterminés à partir des symboles d'identification précédemment associés aux emplacements de couleurs des points échantillons, tous les emplacements de couleurs affectés du même symbole d'identification constituant respectivement un espace d'identification de couleurs,

c) pour la correction limite partielle d'un espace d'identification de couleurs après constitution des espaces d'identification de couleurs se situant à l'intérieur de l'espace de couleurs, au moins un emplacement de couleurs est déterminé sous la forme d'emplacements de couleurs échantillons supplémentaires souhaitée, et à cet emplacement de couleurs est associé un des symboles d'identification déjà existant associé aux autres emplacements de couleurs échantillons, ou bien un autre symbole d'identification,

d) l'association de symboles d'identification aux emplacements de couleurs effectuée lors de la constitution des espaces d'identification de couleurs est faite en sens inverse pour les emplacements de couleurs se situant à l'intérieur d'une zone spatiale d'effacement autour de l'emplacement de couleurs échantillons supplémentaires,

e) à chacun des emplacements de couleurs se situant à l'intérieur de la zone d'effacement est associé un nouveau symbole d'identification déterminé à partir des symboles d'identification des emplacements de couleurs échantillons initiaux et de l'emplacement de couleurs échantillons supplémentaires.

2. Procédé selon la revendication 1, caractérisé en ce que la zone d'effacement est constituée d'enveloppes autour de l'emplacement de couleurs échantillons supplémentaires, en ce que les emplacements de couleurs se situant à l'intérieur des enveloppes sont appelés enveloppe par enveloppe à distance croissante de l'emplacement de couleurs échantillons supplémentaires jusqu'à la limite de la zone d'effacement, et des symboles d'identification précédemment associés aux emplacements de couleurs ainsi appelés sont effacés.

3. Procédé selon la revendication 2, caractérisé en ce que les enveloppes revêtent la forme d'enveloppes sphériques.

4. Procédé selon la revendication 3, caractérisé en ce que la constitution de la zone d'effacement est interrompue en arrivant au contact d'une zone d'effacement voisine.

5. Procédé selon une des revendications 1 à 4, caractérisé en ce que pour l'effacement des symboles d'identification à l'intérieur de la zone d'effacement:

a) les emplacements de couleurs de l'espace de couleurs sont appelés et vérifiés en ce qui concerne leur appartenance à la zone d'effacement,

b) les symboles d'identification précédemment associés aux emplacements de couleurs ainsi appelés sont effacés, dans le cas où les emplacements de couleurs ainsi appelés se situent à l'intérieur de la zone d'effacement.

6. Procédé selon la revendication 3, caractérisé en ce que le rayon d'une zone d'effacement sphérique est déterminé à partir de la distance spatiale entre l'emplacement de couleurs échantillons supplémentaires et celui des emplacements de couleurs se situant au plus près de l'emplacement de couleurs échantillons supplémentaires et auquel est associé un autre symbole d'identification que celui associé à l'emplacement de couleurs d'échantillons supplémentaires.

7. Procédé selon la revendication 3, caractérisé en ce que le rayon d'une zone d'effacement sphérique est déterminé à partir de la distance spatiale entre l'emplacement de couleurs échantillons supplémentaires et celui des emplacements de couleurs dont l'appartenance à un espace d'identification de couleurs ne doit pas être modifiée lors de la correction limite partielle ultérieure.

8. Procédé selon la revendication 5, caractérise en ce que:

a) la distance spatiale entre l'emplacement de couleurs échantillons supplémentaires et un emplacement de couleurs appelé est déterminée,

b) l'appartenance à la zone d'effacement de l'emplacement de couleurs ainsi appelé est déterminée par comparaison de la distance précédemment déterminée avec le rayon de la zone d'effacement.

9. Procédé selon une des revendications 1 à 8, caractérisé en ce que lors de la nouvelle affectation, chaque emplacement de couleurs de la zone d'effacement est affecté de symboles d'identification de l'emplacement de couleurs échantillons initial ou de l'emplacement de couleurs échantillons supplémentaires spatialement le plus proche.

10. Procédé selon une des revendications 1 à 8, caractérisé en ce que lors de la nouvelle affectation:

a) autour des emplacements de couleurs échantillons initiaux et supplémentaires, sont mises en place, en tant que points médians d'enveloppes, des enveloppes à des distances identiques par rapport aux points médians d'enveloppes, et les emplacements de couleurs se situant respectivement à l'intérieur des enveloppes sont appelés,

b) les emplacements de couleurs ainsi appelés sont vérifiés en ce qui concerne l'extinction des symboles d'identification qui leur sont associés,

c) les symboles d'identification des emplacements de couleurs constituant les points médians des enveloppes sont respectivement associés aux emplacements de couleurs ainsi appelés.

11. Procédé selon une des revendications 1 à 8, caractérisé en ce que lors de la nouvelle affectation:

a) les emplacements de couleurs qui entourent sous forme d'enveloppes l'emplacement de couleurs échantillons supplémentaires sont appelés enveloppe par enveloppe à distance croissante par rapport à l'emplacement de couleurs échantillons supplémentaires,

b) les distances spatiales des emplacements de couleurs ainsi appelés par rapport à tous les emplacements de couleurs échantillons, sont respectivement déterminées et comparées entre elles,

c) le symbole d'identification de l'emplacement de couleurs échantillons se situant spatialement à proximité immédiate, est respectivement associé aux emplacements de couleurs ainsi appelés.

12. Procédé selon une des revendications 1 à 8, caractérisé en ce que lors de la nouvelle affectation:

a) les emplacements de couleurs sont appelés et sont vérifiés en ce qui concerne l'effacement des symboles d'identification qui leur sont associés,

b) dans le cas où l'effacement a été effectué, les distances spatiales d'un emplacement de couleurs ainsi appelé à tous les emplacements de couleurs échantillons sont déterminées et comparées entre elles,

c) le symbole d'identification de l'emplacement de couleurs échantillons le plus proche spatialement est associé aux emplacements de couleurs dont les symboles d'identification ont été effacés.

13. Procédé selon une des revendications 1 à 12, caractérisé en ce que:

a) des emplacements d'une mémoire sont associés aux emplacements de couleurs de l'espace de couleurs, ces emplacements de mémoire étant addressables par les triplets de composantes de couleurs correspondants mis sous forme numérique,

b) les symboles d'identification associés aux emplacements de couleurs sont déposés aux emplacements de mémoire correspondants.

14. Procédé selon la revendication 1, caractérisé en ce que les triplets de composants de couleurs correspondent aux signaux de valeurs de mesures de couleurs (R, G, B).

15. Procédé selon la revendication 1, caractérisé en ce que les triplets de composantes de couleurs correspondent aux signaux de chrominance (x, y) et au signal de luminance (z).

16. Procédé selon la revendication 1, caractérisé en ce que les triplets de composantes de couleurs correspondent aux coordonnées de couleurs cylindriques (S, T, L).

17. Procédé selon une des revendications 1 à 16, caractérisé en ce que les symboles d'identification associés aux emplacements de couleurs individuels sont affichés.

18. Procédé selon une des revendications 1 à 17, caractérisé en ce que des plans de coupe, représentant des plans de chrominance, d'espaces d'identification de couleurs délimités à l'intérieur de l'espaces de couleurs, sont représentés sur un récepteur de contrôle.

19. Procédé selon la revendication 18, caractérisé en ce que:

a) les triplets de signaux de couleurs d'une couleur susceptible d'être librement sélectionnée sont susceptibles d'être respectivement associés aux différents symboles d'identification,

b) les emplacements de couleurs appartenant aux plans de coupe à représenter, sont sélectionnés et les symboles d'identification qui leur sont associés sont appelés cycliquement,

c) au lieu des symboles d'identification ainsi appelés, les triplets de signaux de couleurs librement associés sont respectivement délivrés au récepteur de contrôle, grâce à quoi les espaces d'identification de couleurs individuels sont représentés dans les différentes couleurs sélectionnées.

20. Procédé selon la revendication 18 ou 19, caractérisé en ce qu'une correction limite est effectuée sur les espaces d'identification de couleurs dans les plans de coupe représentés par substitution de symboles d'identification à l'aide d'un curseur.

21. Dispositif de circuit pour la mise en oeuvre du procédé selon la revendication 2, dispositif comportant:

a) une source de lumière (3, 4) d'une composition spectrale connue par éclairer les surfaces colorées à explorer,

b) trois convertisseurs opto-électroniques (8) pour mesurer des triplets de composantes de couleurs, dispositif caractérisé en ce qu'il comporte:

c) un convertisseur analogique-numérique (19, 20, 21) raccordé au convertisseur optoélectronique (8) pour mettre sous forme numérique les triplets des composantes de couleurs,

d) une mémoire d'identification de couleurs (28) reliée aux convertisseurs analogiques-numériques (19, 20, 21), et dans laquelle chaque emplacement de mémoire correspond à un emplacement de couleurs de l'espace de couleurs, et dans laquelle chaque emplacement de mémoire est adressable par le triplet de composantes de couleurs de l'emplacement de couleurs correspondant, mémoire dans laquelle sont susceptibles d'être déposés sur les emplacements de mémoire, pour servir de signaux d'identification de couleurs, les symboles d'identification associés aux emplacements de couleurs individuels,

e) un étage d'introduction (35) pour l'introduction de symboles d'identification associés à des emplacements de couleurs échantillons,

f) une mémoire d'échantillons (36) reliée à l'étage d'introduction (35) et aux convertisseurs analogiques-numériques (19, 20, 21), pour le dépôt correspondant des triplets mis sous forme numérique des composantes de couleurs, et des symboles d'identification prédéfinis des emplacements de couleurs échantillons,

g) une mémoire d'enveloppe (37) pour le dépôt des coordonnées des enveloppes entourant les emplacements de couleurs,

h) un circuit de calcul (39) raccordé à la mémoire d'échantillons (36), à la mémoire d'enveloppes (37) et à la mémoire d'identification de couleurs (28), pour déterminer les symboles d'identification pour les emplacements de couleurs de l'espace de couleurs, à partir des symboles d'identification des emplacements de couleurs échantillons, et pour le calcul des emplacements de mémoires correspondants de la mémoire d'identification de couleurs (28) lors de la constitution des espaces d'identification de couleurs pour calculer les emplacements de mémoires de la mémoire d'identification de couleurs (28) appartenant à une zone d'effacement, et pour effacer les symboles d'identification correspondants lors de la constitution de la zone d'effacement, ainsi que pour déterminer de nouveaux symboles d'identification pour la zone d'effacement à partir des symboles d'identification des emplacements de couleurs échantillons, et pour appeler les emplacements de mémoires de la mémoire d'identification de couleurs (28) appartenant à la zone d'effacement lors de la correction partielle d'un espace d'identification de couleurs,

i) un dispositif de commande d'adressage (38) relié à la mémoire d'échantillons (36), à la mémoire d'enveloppes (37) et au circuit de calcul (39),

j) un étage de circuit (40) raccordé à la mémoire d'identification de couleurs (28) et au circuit de calcul (39) pour vérifier les emplacements de mémoires appelés de la mémoire d'identification de couleurs (28) en ce qui concerne l'affectation par des symboles d'identification.

22. Dispositif de circuit selon la revendication 21, caractérisé en ce qu'une unité d'affichage (75) pour les symboles d'identification est branchée à la suite de la mémoire d'identification de couleurs (28).

23. Dispositif de circuit selon une des revendications 21 ou 22, caractérisé en ce qu'il comprend:

a) une mémoire de répétition d'image (95) raccordée à la mémoire d'identification de couleurs (28) pour la prise en charge à partir de la mémoire d'identification de couleurs (28) des symboles d'identification appartenant aux plans de couple à représenter,

b) un récepteur de contrôle de couleurs (98) pour la représentation des plans de coupe des espaces d'identification de couleurs,

c) un émetteur de couleurs (99) en liaison avec la mémoire de répétition d'images (95) et la récepteur de contrôle de couleurs (98), et qui associe, en tant que signaux de commande pour le récepteur de contrôle de couleurs (98), à chacun des symboles d'identification lus à partir de la mémoire de répétition d'image (95), le triplet de signaux de couleurs d'une couleur susceptible d'être sélectionnée librement, grâce à quoi les espaces d'identification de couleurs sont représentés avec des couleurs différentes,

d) un circuit de commande (92, 109) avec un appareil de détection de coordonnées (105), et qui est raccordé à la mémoire de répétition d'image (95), pour le repérage d'adresses de mémoire ou bien d'emplacements de couleurs dans la mémoire de répétition d'image (95) et pour la substitution des symboles d'identification sous les adresses appelées.

## Claims

1. Colour recognition method wherein a coloured surface is scanned trichromatically, the colour component triplets measured representing the spatial co-ordinates of the colour locations within a colour space, and wherein a colour recognition space is delimited within the colour space for each of the colours which is to be recognized, and the colour component triplets are checked on regarding their correlation with the colour recognition spaces and a colour recognition signal is delivered in case of a correlation with a colour recognition space, characterized in that

a) sample points are determined for a number of colours which are to be recognized and identification symbols are allocated to their colour locations within the colour space, as colour recognition signals,

b) the colour recognition spaces are formed by the fact that after determining the sample points, the colour locations of the colour space have allocated to them identification symbols which are derived from the identification symbols previously allocated to the colour locations of the sample points, all the colour locations tagged with the same identification symbol forming a colour recognition space in each case,

c) for partial boundary correction of a colour recognition space after the forming of the colour recognition spaces situated within the colour space at least one colour location is determined as a complementary sample colour location in the spatial vicinity of a desired partial boundary correction, and this colour location has allocated to it one of the already available identification symbols allocated to the other sample colour locations, or another identification symbol,

d) the allocation performed upon forming the colour recognition spaces of identification symbols to colour locations for the colour locations situated around the complementary sample colour locations within a spatial erasure region is cancelled and

e) each of the colour locations situated within the erasure region has allocated to it a new identification symbol derived from the identification symbols of the original sample colour locations and of the complementary sample colour location.

2. Method according to claim 1, characterized in that the erasure region is formed by shells around the complementary sample colour location, the colour locations lying within the shells being called up shell by shell with increasing spacing from the complementary sample colour location and as far as the boundary of the erasure region, and the identification symbols previously allocated to the colour locations called up being cancelled.

3. Method according to claim 2, characterized in that the shells are produced as spherical shells.

4. Method according to claim 3, characterized in that the forming of an erasure region is stopped in case of tangency of an adjacent erasure region.

5. Method according to any one of the claims 1 to 4, characterized in that for the purpose of cancelling the identification symbols within the erasure region

a) colour locations of the colour space are called up and checked for correlation with the erasure region and

b) the identification symbols previously allocated to the colour locations called up are cancelled if the colour locations called up lie within the erasure region.

6. Method according to claim 3, characterized in that the radius of a spherical erasure region is determined from the spatial distance between the complementary sample colour location and the colour location closest to the former and which has allocated to it a different identification symbol from that of the complementary sample colour location.

7. Method according to claim 3, characterized in that the radius of a spherical erasure region is determined from the spatial distance between the complementary sample colour position and the colour location whereof the correlation with a colour recognition space is not intended to be altered during the subsequent partial boundary correction.

8. Method according to claim 5, characterized in that

a) the spatial distance between the complementary sample colour location and a colour location called up is determined and

b) the correlation of the called up colour location with the erasure region is determined by comparison of the spatial distance determined with the radius of the erasure region.

9. Method according to any one of the claims 1 to 8, characterized in that whilst being retagged, each colour location of the erasure region is tagged with the identification symbol of the spatially closest original sample colour location or complementary sample colour location.

10. Method according to any one of the claims 1 to 8, characterized in that during the retagging operation

a) shells are placed around the original and complementary sample colour locations as shell centres with ever identical distances from the shell centres, and the colour locations situated within the shells are called up in each case,

b) the colour locations called up are checked for implementation of the cancellation of the identification symbols allocated and

c) the identification symbols of the colour locations forming the shell centres are allocated to the colour locations called up in each case.

11. Method according to any one of the claims 1 to 8, characterized in that during the retagging operation

a) the colour locations englobing the complementary sample colour location in shell form, are called up shell by shell with rising distance from the complementary sample colour location,

b) the spatial distances of the colour locations called up from all the sample colour locations are determined and compared with each other and

c) the identification symbol of the spatially closest sample colour location is allocated to the colour locations called up in each case.

12. Method according to any one of the claims 1 to 8, characterized in that during the retagging operation

a) the colour locations are called up and checked for cancellation of identification symbols allocated,

b) in case of a cancellation having been performed, the spatial distances of a colour location called up from all sample colour locations are determined and compared to each other and

c) the identification symbol of the spatially closest sample colour location is allocated in each case to the colour locations whereof the identification symbols are cancelled.

13. Method according to any one of the claims 1 to 12, characterized in that

a) storage locations of a memory which are addressable by the corresponding digitalized colour component triplets are allocated to the colour locations of the colour space and

b) the identification symbols allocated to the colour locations are stored at the corresponding storage locations.

14. Method according to claim 1, characterized in that the colour component triplets correspond to the colour measuring signals (R, G, B).

15. Method according to claim 1, characterized in that the colour component triplets correspond to the chrominance signals (x, y) and to the brightness signal (z).

16. Method according to claim 1, characterized in that the colour component triplets correspond to the cylinder colour co-ordinates (S, T, L).

17. Method according to any one of the claims 1 to 16, characterized in that the identification symbols allocated to the separate colour locations are indicated.

18. Method according to any one of the claims 1 to 17, characterized in that sectional planes representing chrominance planes through the colour recognition spaces delimited within the colour space are displayed on a monitor.

19. Method according to claim 18, characterized in that

a) colour signal triplets of freely selectible colours are in each case allocated to the different identification symbols,

b) the colour locations correlated with the sectional plane which is to be displayed are selected and their corresponding identification symbols are called up cyclically and

c) instead of the identification symbols called up, the freely allocated colour signal triplets are fed to the monitor, whereby the separate colour recognition spaces are displayed in the different colours selected.

20. Method according to claim 18 or 19, characterized in that a boundary correction on the colour recognition spaces is performed in the sectional planes displayed, by substitution of identification symbols by means of a cursor.

21. Circuitry for application of the method according to claim 2, comprising

a) a light source (3, 4) of known spectrum composition for lighting the coloured surface which is to be examined and

b) three opto-electronic transducers (8) for measuring colour component triplets, characterized by

c) analog/digital transducers (19, 20, 21) connected to the opto-electronic transducers (8) for digitalisation of the colour component triplets,

d) a colour recognition memory (28) connected to the A/D transducers (19, 20, 21) in which each storage location corresponds to a colour location of the colour space and each storage location may be addressed by the colour component triplet of the corresponding colour location, and wherein identification symbols which are to be allocated to the separate colour locations may be stored at the storage locations as colour recognition signals,

e) an input stage (35) for presetting identification symbols which are to be allocated to sample colour locations,

f) a sample memory (36) coupled with the input stage (35) and the A/D transducers (19, 20, 21) for coordinated storage of digitalized colour component triplets and of the preset identification symbols of the sample colour locations,

g) a shell memory (37) for storage of the co-ordinates of the shells englobing the colour locations,

h) a calculator circuit (39) connected to the sample memory (36), to the shell memory (37) and to the colour recognition memory (23) for determining the identification symbols for the colour locations of the colour space from the identification symbols of the sample colour locations and for calculation of the corresponding storage locations of the colour recognition memory (28) and for cancelling the corresponding identification symbols upon forming the erasure region and for determining of new identification symbols for the erasure region from the identification symbols of the sample colour locations and for addressing the storage locations appertaining to the erasure region of the colour recognition memory (28) during the partial correction of a colour recognition space,

i) an address control stage (38) connected to the sample memory (36), the shell memory (37) and the calculator circuit (39),

j) a circuit stage (40) connected to the colour recognition memory (28) and to the calculator circuit (39) for checking the storage locations addressed of the colour recognition memory (28) in respect of being tagged with identification symbols.

22. Circuitry according to claim 21, characterized in that the colour recognition memory (28) has post-connected to it an indicator unit (75) for the identification symbols.

23. Circuitry according to claim 21 or 22, characterized by

a) an image refresh memory (95) which is connected to the colour recognition memory (28) for taking over the identification symbols appertaining to the sectional planes to be displayed, from the colour recognition memory (28),

b) a colour monitor (98) for displaying the sectional planes through the colour recognition spaces,

c) a colour emitter (99) which is in communication with the image refresh memory (95) and the colour monitor (98) and allocates the colour signal triplet of freely selectible colours to each of the identification symbol read out of the image refresh memory (95) as control signals for the colour monitor (98), whereby the colour recognition spaces are displayed in different colours and

d) a control circuit (92, 109) comprising a co-ordinate detection device (105) which is connected to the image refresh memory (95) for marking memory addresses or colour locations in the image refresh memory (95) and for substitution of the identification symbols under the addresses called.

Fig.1

0033493

Fig. 2a

Fig. 2b

Fig. 2c

2

Fig. 3